Europäisches Patentamt

European Patent Office

Office européen des brevets

(19)

(11) Publication number: **0 225 930**
**B1**

(12) EUROPEAN PATENT SPECIFICATION

(45) Date of publication of patent specification: **21.09.88**

(51) Int. Cl.⁴: **C 21 C 5/40**

(21) Application number: **85115717.2**

(22) Date of filing: **10.12.85**

(54) Exhaust-gas treatment system of sealed-type converter.

(43) Date of publication of application:
**24.06.87 Bulletin 87/26**

(45) Publication of the grant of the patent:
**21.09.88 Bulletin 88/38**

(84) Designated Contracting States:
**DE FR GB IT NL**

(56) References cited:
**US-A-3 352 088**
**US-A-3 410 288**
**US-A-4 050 682**
**US-A-4 264 061**

**PATENTS ABSTRACTS OF JAPAN, vol. 10, no.
36 (C-328)2093r, 13th February 1986; & JP - A -
60 187 611 (SHIN NIPPON SEITETSU K.K.)
25-09-1985**

(73) Proprietor: **NIPPON STEEL CORPORATION
6-3 Otemachi 2-chome Chiyoda-ku
Tokyo 100 (JP)**
(73) Proprietor: **KAWASAKI JUKOGYO KABUSHIKI
KAISHA
1-1 Higashikawasaki-cho 3-chome
Chuo-ku Kobe-shi Hyogo-ken (JP)**

(72) Inventor: **Ogata, Seishi c/o Nippon Steel
Corporation
Yawata Works 1-1-1 Edamitsu Yahata Higashi-
Ku
Kitakyushu-Shi Fukuoka-Ken (JP)**
Inventor: **Arima, Keiji c/o Nippon Steel
Corporation
Sakai Works 1, Shikuko Yawata-Cho
Sakai-Shi Osaka-Fu (JP)**
Inventor: **Ohtsuki, Masahiro
136-30, Murata-Cho
Chiba-Shi Chiba-Ken (JP)**

(74) Representative: **Klunker . Schmitt-Nilson .
Hirsch
Winzererstrasse 106
D-8000 München 40 (DE)**

# Description

## BACKGROUND OF THE INVENTION

This invention relates generally to steel converters and exhaust-gas treatment systems thereof and more particularly to an exhaust-gas treatment system of a sealed-type converter for operating in a fully sealed state relative to the outside air or a state close thereto.

More specifically, the invention concerns an exhaust-gas treatment system of the above stated kind which is provided with an emergency air admission valve device which is normally closed for normal operation of the converter and its exhaust-gas treatment system but operates instantaneously when there is an abrupt interruption of the converter operation to admit outside air into the hood of the exhaust-gas treatment system thereby to prevent the occurrence of abnormal negative pressure in the hood and related parts of the system.

As is well known, the operation of a converter comprises the three process steps of charging, blowing, and pouring. In the blowing step, as will be described in detail hereinafter, pure oxygen is blown through an oxygen lance or jet into molten metal in the converter to accomplish refining. The oxygen thus blown and carbon within the molten metal react to form a large quantity of carbon monoxide, CO, gas. Ordinarily, the converter is provided with an exhaust-gas treatment system for recovering this CO gas, which has commercial value, and preventing leakage of CO gas into the surrounding atmosphere.

The exhaust-gas processing system is coupled to the converter mouth by a hood. Since the converter is tilted about a horizontal axis for the charging and pouring steps mentioned above, the hood must be uncoupled from and recoupled to the converter mouth at the beginning and end of each of these steps. Accordingly, the hood is provided with a skirt which can be raised and lowered for attachment to and detachment from the converter mouth. In a system wherein this skirt is adapted to fit tightly in a leak-proof or very nearly leak-proof manner against the converter mouth, the converter becomes one referred to herein as a sealed-type converter.

Normal operation of a sealed-type converter is efficient and economical. However, if the operation is suddenly stopped for some reason, a number of problematic situations, including danger of explosion and resulting damage and injury, arise as will be described in detail hereinafter in connection with one embodiment of the invention.

## SUMMARY OF THE INVENTION

In view of the above described circumstance in the art, it is an object of this invention to provide an exhaust-gas treatment system of a sealed-type converter, which system is provided with an emergency air admission valve device for preventing abnormal negative pressure within the hood and related parts of the system when an abrupt stoppage of the converter operation occurs.

According to this invention, briefly summarized, there is provided an exhaust-gas treatment system of a sealed-type converter, said system having a hood for guiding converter exhaust gas and being provided with an emergency air admission valve device comprising a valve box having at the upper part thereof a valve entrance for inflow of outside air, an air intake duct communicatively connecting the valve box and said hood, an annular valve seat formed below said valve entrance at the upper part of the valve box, a valve body which is capable of moving up and down within the valve box between an upper position of valve closure against the valve seat to close the valve entrance and a lower position of full valve opening, guide means for guiding the valve body in the up-and-down movement thereof, and a valve body locking device functioning to normally hold the valve body in locked state at said upper position thereof and operating at the time of an emergency to release the valve body thereby to permit the valve body to drop to said lower position thereof and thereby to admit outside air into the hood.

The nature, utility, and further features of this invention will be more clearly apparent from the following detailed description with respect to a preferred embodiment of the invention when read in conjuction with the accompanying drawings.

## BRIEF DESCRIPTION OF THE DRAWINGS

In the drawings:

FIGURE 1 is a schematic diagram illustrating the esential parts of one example of the exhaust-gas treatment system according to the invention of a sealed-type converter;

FIGURE 2 is a side elevation, mostly in vertical section, showing the essential construction of an embodiment of an emergency air admission valve device constituting an essential component of the system shown in FIGURE 1; and

FIGURE 3 is a relatively enlarged, partial plan view showing essential parts of a catch mechanism for locking and releasing a valve body in the air admission valve device.

## DETAILED DESCRIPTION OF THE INVENTION

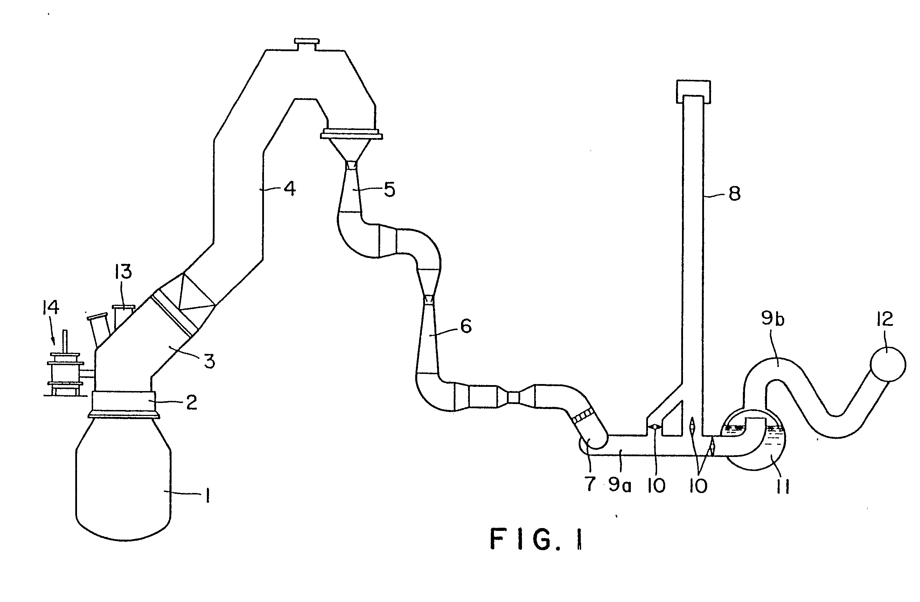

Referring to FIGURE 1, the essential parts of the example shown therein of the converter exhaust-gas treatment system of this invention are, in sequentially serially connected state from its upstream end, a hood 3 having a skirt 2 connected to the mouth of a converter 1, a cooler 4, dust removers 5 and 6, an induced-draft fan 7, a passage 9a, a stack 8 connected at its lower end to an intermediate part of the passage 9a, a water-sealed check valve 11 connected to the downstream end of the passage 9a, a passage 9b, a duct 12, and a gas holder (not shown). Dampers 10 are provided respectively at the bottom end of the stack 8 and at the downstream end of the passage 9a and can be turned to appropriate positions to direct the flow of gas through the passage 9a selectively either through the stack 8 or through the water-sealed check valve 11.

The hood 3 is provided at an upper part thereof with an oxygen lance fitting 13 for insertion downward of an oxygen lance (not shown) into the converter 1 containing a charge of molten metal. In the operation of the converter 1, pure oxygen is blown through the lance into the molten metal in the converter 1 to accomplish refining. During this blowing-refining action (commonly referred to as "blowing"), the oxygen thus blown through the lance and carbon within the molten metal react, and a large quantity of carbon monoxide, CO, gas at a high temperature is generated.

Gas of low CO concentration thus produced at the initial and final periods of this blowing is drawn into the hood 3 by the induced-draft fan 7, cooled in the hood 3 and the cooler 4, cleaned of dust by the dust removers 5 and 6, and, as it passes upward through the stack 8, undergoes combustion at the upper part thereof, the resulting combustion fumes being dissipated into the atmosphere. The gas of high CO concentration produced in the converter 1 during the period of maximum reaction intensity of the blowing is caused by the changing over of dampers 10 to pass through the water-sealed check valve 11 and the duct 12 to be collected as gas of commercial value in the gas holder.

CO gas is not only extremely dangerous because it can cause CO poisoning if it escapes into atmosphere inhabited by humans and animals, but it can also cause danger of sudden combustion by reacting with outside air. Accordingly, the skirt 2, which is capable of being raised and lowered, is provided between the mouth of the converter 1 and the hood 3, and the gap between the converter mouth and this skirt 2 is closed by lowering the skirt 2 thereby to prevent leakage of CO gas to the outside and infiltration of outside air into the skirt 2.

As was briefly described hereinbefore, the operation of a converter comprises the three process steps of charging, blowing, and pouring. In the first charging step, scrap steel is charged into the converter 1 and molten pig iron produced in a shaft or blast furnace is charged by a hot-metal ladle from an upper level into the converter 1. In the second blowing step, pure oxygen is blown into the molten metal thus charged into the converter 1 thereby to accomplish refining. In the third pouring step, the molten steel thus refined is poured out of the converter into a teeming ladle at a lower level.

Of these three process steps, the first charging step and the third pouring step are carried out with the converter 1 in tilted states, and therefore, the skirt 2 of the hood 3 is raised during these steps. In the second blowing step, the skirt 2 is lowered to close the gap between the mouth of the converter 1 and the skirt 2 thereby to prevent leakage of CO gas to the outside and infiltration of outside air.

In actual practice, however, slag tends to accumulate on the rim of the converter mouth, which therefore does not always have a level smooth surface. Consequently, it becomes impossible to obtain an intimate sealing state between the skirt 2 and the converter mouth, and closure is made in a state wherein a certain amount of opening remains therebetween. For this reason, the infiltration of some outside air into the converter through this opening and the consequent lowering of the CO concentration therewithin has been unavoidable. This common type of converter exhaust-gas treatment system is herein referred to as the "open type".

However, because of the present increase in demand for recovery of gas of high CO concentration (purity) from converter operation, there is a trend toward securing complete sealing or a state very close thereto between the converter mouth and the skirt 2. An exhaust gas treatment system of this character is herein referred to as that of the "sealed type".

In a converter exhaust-gas treatment system of this complete sealing type, a new technical problem arises in the case of emergency or abrupt stoppage of operation. The ordinary procedure for such an emergency stoppage is to stop the blowing in of oxygen. Consequently, the quantity of the gas generated in the converter suddenly drops.

In a conventional exhaust-gas treatment system of the above mentioned open type, outside air in an amount corresponding to the reduction in quantity of the generated gas is sucked in through the gap between the converter mouth and the skirt 2, and a gas quantity corresponding to the induced gas quantity of the induced draft fan 7 is secured, whereby the pressure within the exhaust-gas treatment system is maintained. In the case of a sealed type system, however, the pressure within the system undergoes an instantaneous drop to a negative gauge value, which can be of a magnitude to cause damage or breakage to parts of the system, thereby giving rise to a serious problem.

That is, for example, in the case of an instantaneous drop in pressure causing outside air to infiltrate through the sealing part or an inrush of outside air due to breakage, there arises a great possibility of explosion and resulting damage. The reason for this is that the portion of the CO gas at high temperature in the system undergoes gradual natural combustion with the oxygen gas $O_2$ in the outside air, and no explosion occurs, but the low-temperature portion of the CO gas after cooling undergoes instantaneous combustion if there is a source of ignition to cause an explosion.

Furthermore, in the case of the conventional open type system, the $O_2$ in the outside air drawn in through the gap between the converter mouth and the skirt 2 and the CO gas at high temperature react (combustion of CO gas) to form $CO_2$ gas. As a consequence, a layer of this $CO_2$ gas (referred to herein as an inert-gas layer) is interposed between the CO gas previously induced and cooled and the outside air drawn in afterward, whereby contact between the cooled CO gas and the following outside air drawn in is blocked, and there is little danger of an explosion.

In the case of a sealed-type system, however, formation of an amply effective inert gas layer does not occur because there is no infiltration or the infiltration of only a very minute quantity of outside air, whereby there is a great danger of explosion. Still another dangerous situation arises at the initial period and the final period of the blowing step, when because of the small quantity of gas generated in the converter 1 and also the low CO concentration in the gas, the CO gas is not recovered but is passed through the stack 8 and burned at the top part thereof, the resulting combustion gas being discharged out. However, if an emergency stoppage occurs during such a period, the pressure within the system abruptly drops to a negative value, and at the same time the gas flow velocity within the stack 8 drops. As a consequence, outside air infiltrates into the stack 8 to cause a backfire, whereby there is the danger of a violent combustion or an explosion occurring in the stack 8.

Thus, the instantaneous negative pressure arising within the system as a consequence of the structural character of the sealed type system gives rise to a number of technical problems. Under this present circumstance, there is an urgent need for the development of a converter exhaust-gas treatment system which is capable of efficiently recovering CO gas of high purity and yet has a high degree of safety.

This invention provides such a system for a sealed-type converter.

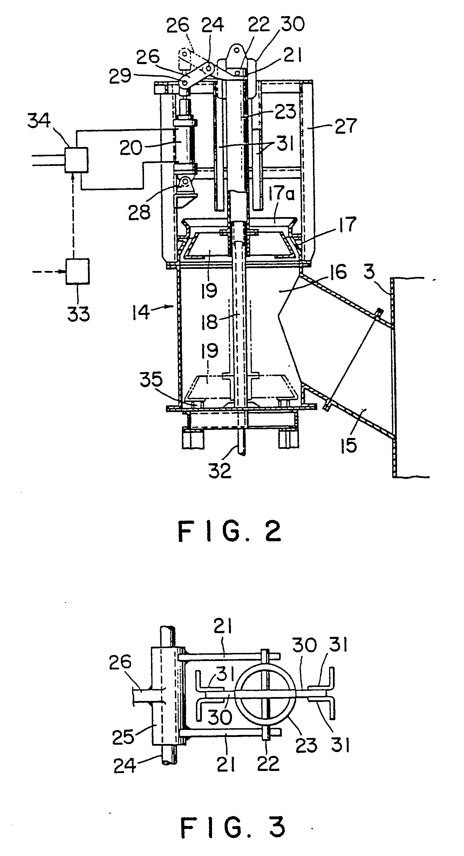

In one embodiment of this invention as shown in the drawings, an emergency air admission valve device 14 is connected to the hood 3. As shown in FIGURE 2, showing in detail the construction of this valve device 14, this device has a cylindrical valve box 16 of vertical centerline. This valve box 16 is communicatively connected via an air intake duct 15 to the hood 3 and supports around its upper rim an annular valve seat 17 having an air entrance or upper valve seat opening 17a. A valve body 19 having an outer valve surface of frustoconical shape is provided below the valve seat 17 to function cooperatively therewith and is provided with a vertical hollow valve stem 23 coaxially and integrally fixed at its lower end to the valve body 19 and extending upward therefrom.

The valve box 16 provided coaxially therein with a vertical guide rod 18 integrally fixed at its lower end to the bottom of the valve box 16. The above-described valve stem 23 is slideably fitted around the guide rod 18. When the valve device 14 is in its closed state, the valve body 19 is fitted tightly against the valve seat 17, being thus held by the locking engagement between an engagement member 22 fixed to the upper end of the valve stem 23 and the outer distal end of a catch lever 21. This catch lever 21 can be actuated by a piston-cylinder actuator 20 to release the engagement member 22 and therefore the valve stem 23 and the valve body 19. The valve body 19 thereby separates from the valve seat 17 and drops, the valve stem 23 and therefore the valve body 19 being guided by the guide rod 18.

More specifically, the engagement member 22 is in the form of a pin inserted horizontally through the valve stem 23 at a point near the upper end thereof and projecting outward therefrom in opposite directions. When the valve body 19 is to be locked in its closed stage against the valve seat 17, the outwardly projecting ends of this engagement member 22 are respectively engaged by the outer free ends of a pair of lever arms constituting the above mentioned catch lever 21 and disposed on opposite sides of the valve stem 23. These lever arms 21, 21 are integrally fixed at their inner or proximal ends to a horizontal boss 25, which is rotatably supported on a horizontal fixed pivot 24. A lever arm 26 is integrally fixed at its proximal end to the boss 25 and at its free distal end is rotatably pin-connected by a pin 29 to the outer end of the piston rod of the aforementioned piston-cylinder actuator 20. The vertical cylinder of this actuator 20 is pivotally supported at its lower end by a bracket 28 fixed to a frame 27 fixedly supported on the upper part of the aforementioned valve box 16.

On opposite sides of the upper end part of the valve stem 23, a pair of guided slide plates 30 are fixed to the valve stem 23 and respectively project in opposite directions and are perpendicular to the engagement member 22. As shown in FIGURE 3, each guided slide plate 30 is slidably interposed between a pair of opposed vertical guide members 31. The two pairs of these guide members are fixed to the frame 27.

The emergency air admission valve device 14 is provided with means for returning the valve body 19 which has dropped to the bottom of the valve box 16 to its normally closed position against the valve seat 17. In the instant embodiment, the guide rod 18 is of tubular form and receives a return rod 32 inserted therethrough from the bottom. This return rod 32 is driven upward by a driving device (not shown) to return the valve stem 23 and the valve body 19 upward to their positions for closure of the valve 14.

While, in the instant embodiment, the valve body 19 is locked in closed state by the engagement member 22, which is operable by the actuator 20 to release the valve body 19, a valve body locking device in which the valve body 19 is caused to adhere closely against the valve seat 17 by a magnet device, for example, may also be used. The essential requirement is that the valve body locking device be capable of instantaneously releasing the valve body 19 for prompt valve opening action.

The operation of the system of the invention of the above described constitution and arrangement is as follows.

When the emergency valve device 14 is in the state indicated in FIGURE 2, the engagement member 22 is locked and prevented from descending by the catch lever 21, whereby the valve body 19 is held in its raised position in closed state against the valve seat 17. In the case when, with the emergency valve device 14 in this state, an emergency state such as a stoppage of the induced draft fan 7 or some other component such as the control system (the induced-draft fan 7 will not stop abruptly because of its momentum) occurs because of some failure such as power failure, this emergency state is detected by means (not shown) which generates a corresponding signal. In response to this signal, the blowing of oxygen into the converter 1 is stopped, and at the same time this signal is transmitted by way of a signal detection device 33 (FIGURE 2) to activate a hydraulic circuit changeover device 34 for driving the piston-cylinder actuator 20. The piston rod of the actuator 20 thereupon is thrust upward as indicated by chain line, and the catch lever 21 separates from the engagement member 22, which is thereby released. Therefore the valve body 19 drops under gravitational force.

In this case, when the blowing in of oxygen stops, the pressure within the converter 1 and the hood 3 becomes negative to some extent. This negative pressure acts as a component of force drawing the valve body 19 downward and has the effect of increasing the initial velocity of descent of the valve body 19 as it starts to drop after being released by the catch lever 21. Thus, the time period from the instant of release of the valve body 19 to the start of its drop is shortened, whereby the valve seat opening 17a is opened instantaneously, and outside air is drawn into the hood 3. The valve body 19 thus drops onto an impact absorbing material 35 on the bottom of the valve box 16.

The outside air thus drawn in flows into the CO gas at high temperature, which undergoes combustion with the $O_2$ in this air, whereby an inert-gas layer as described hereinbefore is formed. At the same, a gas quantity corresponding to the quantity of gas drawn by the induced-draft fan 7 is obtained, and abnormal negative pressure within the exhaust-gas treatment system does not occur. Thereafter, the valve body 19 is raised and returned to its closed position by raising the return rod 32.

In normal operation of the converter and the exhaust-gas treatment system, the valve body 19 is in closed position against the valve seat 17, and recovery of CO gas of high purity is carried out.

As described above, in the exhaust-gas treatment system of a sealed type converter according to this invention, the hood is provided with an air intake duct, and an emergency air admission valve device in which the air intake duct is opened by the dropping action of a valve body. Therefore, even if an emergency stopping of the blowing in of oxygen should occur, the air intake duct is immediately opened to permit the prompt drawing of outside air into the hood, whereby the occurrence of abnormal negative pressure within the exhaust gas treatment system can be prevented.

Therefore, there is no danger such as damage or breakage of the equipment, explosion due to insufficiency of formation of an inert gas layer, and backfiring within the stack whereby an exhaust-gas treatment system for a sealed type converter of high degree of safety can be provided. Furthermore, CO gas of high purity can be recovered by this system.

## Claims

1. An exhaust-gas treatment system of a sealed-type converter, said system having a hood (3) for guiding converter exhaust gas, characterized in that the system is provided with an emergency air admission valve device (14) comprising: a valve box (16) having at the upper part thereof a valve entrance for inflow of outside air; an air intake duct (15) communicatively connecting the valve box (16) and said hood (3); an annular valve seat (17) formed below said valve entrance at the upper part of the valve box; a valve body (19) which is capable of moving up and down within the valve box between an upper position of valve closure against the valve seat (17) to close the valve entrance and a lower position of full valve opening; guide means (18) for guiding the valve body (19) in the up-and-down movement thereof; and a valve body locking device (20, 21, 22) functioning to normally hold the valve body (19) in locked state at said upper position thereof and operating in an emergency to release the valve body thereby to permit the valve body (19) to drop to said lower position thereof and thereby to admit outside air into the hood.

2. An exhaust-gas treatment system of a sealed-type converter as claimed in claim 1 in which a vertical hollow valve stem (23) is fixed integrally and coaxially to the valve body (19), and the guide means comprises a vertically fixed guide rod (18), the hollow valve stem (23) being slidably fitted on and around the guide rod (18).

3. An exhaust-gas treatment system of a sealed-type converter as claimed in claim 2 in which the valve body locking device has an engagement member (22) projecting outward from the outer surface of the valve stem (23) and a catch member (21) which can be actuated to undergo displacement between a locking position for catching against the lower side of the engagement member (22) thereby to prevent the valve stem (23) and the valve body (19) from dropping and a release position at which the catch member (21) has become disengaged from the engagement member (22) thereby permitting the valve stem and the valve body to drop to said lower position of full valve opening.

4. An exhaust-gas treatment system of a sealed-type converter as claimed in claim 3 in which the valve body locking device further has a driving device (20), and the catch member comprises at least one lever arm (21) capable of being driven in rotational displacement by the driving device (20).

5. An exhaust-gas treatment system of a sealed-type converter as claimed in claim 2 in which the hollow valve stem (23) has on the outer surface thereof at least one guided slide member (30), and a guide member (31) is provided along the path of up-and-down movement of the hollow valve stem (23) to guide the guided slide member in up-and-down movement.

6. An exhaust-gas treatment system of a sealed-type converter as claimed in claim 2 in which the guide rod (18) is of tubular shape with a hollow interior through which a return member (32) is inserted for returning the valve body (19) which has dropped to said lower position back to said upper position of valve closure against the valve seat (17).

## Patentansprüche

1. Abgasbehandlungseinrichtung eines abgeschlossenen Konverters, welche einen Abzug(3) zur Führung des Konverterabgases aufweist, dadurch gekennzeichnet, da8 die Einrichtung mit einer Hilfsluftzufuhr-Ventilvorrichtung (14) versehen ist, welche ein Ventilgehäuse (16), welches an seinem oberen Abschnitt einen Ventileinlaß zum Einströmen von Umgebungsluft aufweist; eine Lufteinlaßleitung (15), welche mit dem Ventilgehäuse (16) und dem Abzug (3) kommunizierend verbunden ist; einen ringförmigen Ventilsitz (17), der unter dem Ventileinlaß am oberen Abschnitt des Ventilgehäuses gebildet ist; einen Ventilkörper (19), welcher in dem Ventilgehäuse zwischen einer oberen Position mit gegen den Ventilsitz (17) geschlossenem Ventil, um den Ventileinlaß zu schließen, und einer unteren Position mit vollständig geöffneter Ventilöffnung auf- und abbewegbar ist; eine Führungseinrichtung (18) zur Führung des Ventilkörpers (19) bei dessen Auf- und Abwärtsbewegung; sowie eine Ventilkörpersperreinrichtung (20, 21, 22) umfaßt, welche normalerweise den Ventilkörper (19) in gesperrtem Zustand in seiner oberen Position hält und bei einem Störfall den Ventilkörper freigibt, so daß der Ventilkörper (19) in seine untere Position fällt und dadurch Umgebungsluft in die Abzugshaube eintreten läßt.

2. Abgasbehandlungseinrichtung nach Anspruch 1, dadurch gekennzeichnet, daß ein senkrechter hohler Ventilschaft (23) einstückig und koaxial an dem Ventilkörper (19) befestigt ist und die Führungseinrichtung eine senkrecht befestigte Führungsstange (18) aufweist, wobei der hohle Ventilschaft (23) auf der und um die Führungsstange (18) verschiebbar angeordnet ist.

3. Abgasbehandlungseinrichtung nach Anspruch 2, dadurch gekennzeichnet, daß die Ventilkörpersperreinrichtung ein Eingriffsteil (22), welches von der Außenfläche des Ventilschaftes (23) nach außen ragt, sowie ein Fangteil (21), welches betätigt werden kann, um zwischen einer Sperrposition zum Fangen der unteren Seite des Einriffteils (22), so daß der Ventilschaft (23) und der Ventilkörper (19) am Herabfallen gehindert werden, und einer Freigabeposition bewegt werden zu können, bei welcher das Fangteil (21) und das Eingriffteil (22) außer Eingriff stehen, so daß der Ventil schaft und der Ventilkörper in die untere Position mit vollständig geöffnetem Ventil herabfallen können.

4. Abgasbehandlungseinrichtung nach Anspruch 3, dadurch gekennzeichnet, daß die Ventilkörpersperreinrichtung weiterhin eine Antriebsvorrichtung (20) aufweist und das Fangteil wenigstens einen Hebelarm (21) umfaßt, welcher durch die Antriebseinrichtung (20) in Rotationsbewegung versetzt werden kann.

5. Abgasbehandlungseinrichtung nach Anspruch 2, dadurch gekennzeichnet, daß der hohle Ventilschaft (23) an seiner Außenfläche wenigstens ein Führungsgleitteil (30) aufweist und ein Führungsteil (31) entlang dem Weg der Auf- und Abwärtsbewegung des hohlen Ventilschaftes (23) vorgesehen ist, um das Führungsgleitteil bei der Auf- und Abwärtsbewegung zu führen.

6. Abgasbehandlungseinrichtung nach Anspruch 2, dadurch gekennzeichnet, daß die Führungsstange (18) mit einem hohlen Innenraum rohrförmig ausgebildet ist, durch welchen ein Rückhohlteil (32) eingeführt wird, um den Ventilkörper (19), welcher in die untere Position gefallen ist, zurück zur oberen Position mit gegen den Ventilsitz (17) geschlossenem Ventil zurückzuholen.

## Revendications

1. Un système de traitement des gaz d'échappement d'un convertisseur de type étanche, ledit système comportant une hotte (3) pour guider les gaz d'échappement du convertisseur, caractérisé en ce que le système est équipé d'un dispositif (14) de soupape de sécurité d'admission d'air comprenant: un boîtier de soupape (16) ayant à sa partie supérieure une entrée de soupape pour l'entrée de l'air extérieur; une conduite d'admission d'air (15) reliant le boîtier de soupape (16) et ladite hotte (3) en les faisant communiquer, un siège annulaire de soupape (17) formé au-dessous de ladite entrée de soupape à la partie supérieure du boîtier de soupape; un corps de soupape (19) qui est capable de monter et de descendre à l'intérieur du boîtier de soupape entre une position supérieure de fermeture de la soupape contre le siège de soupape (17) pour fermer l'entrée de la soupape et une position inférieure d'ouverture complète de la soupape; des moyens de guidage (18) pour guider le corps de soupape (19) dans son mouvement ascendant et descendant; et un dispositif de blocage du corps de soupape (20, 21, 22) fonctionnant pour maintenir normalement le corps de soupape (19) à l'état bloqué dans sadite position supérieure de ce dernier et fonctionnant en cas d'urgence pour libérer le corps de soupape pour permettre ainsi au corps de soupape (19) de tomber dans sadite position inférieure et admettre ainsi de l'air extérieur dans la hotte.

2. Un système de traitement des gaz d'échappement d'un convertisseur de type étanche comme revendiqué à la revendication 1 dans lequel une tige de soupape (23) verticale creuse est fixée intégralement et coaxialement au corps de soupape (19), et le moyen de guidage comprend une tige de guidage (18) fixée verticalement, la tige de soupape creuse (23) étant montée en coulissement sur et autour de la tige de guidage (18).

3. Un système de traitement des gaz d'échappement d'un convertisseur de type étanche comme revendiqué à la revendication 2, dans lequel le dispositif de blocage du corps de soupape comporte un élément de mise en prise (22) dépassant vers l'extérieur à partir de la surface extérieure de la tige de soupape (23) et un élément de prise (21) qui peut être manoeuvré pour subir un déplacement entre une position de verrouillage pour appuyer contre la face inférieure de l'élément d'engagement (22) en empêchant ainsi la tige de soupape (23) et le corps de soupape (19) de tomber et une position de dégagement dans laquelle l'élément de prise (21) a été dégagé de l'élément de mise en prise (22) en permettant ainsi à la tige de soupape et au corps de soupape de tomber jusqu'à ladite position inférieure d'ouverture complète de la soupape.

4. Un système de traitement des gaz d'échappement d'un convertisseur de type étanche comme revendiqué à la revendication 3, dans lequel le dispositif de blocage du corps de soupape comprend encore un dispositif d'entraînement (20), et l'élément de prise comprend au moins un bras de levier (21) susceptible d'être entraîné en rotation par le dispositif d'entraînement (20).

5. Un système de traitement des gaz d'échappement d'un convertisseur de type étanche comme revendiqué à la revendication 2, dans lequel la tige creuse de soupape (23) possède sur sa surface extérieure au moins un élément coulissant guidé (30), et un élément de guidage (31) est prévu le long du trajet du mouvement ascendant et descendant de la tige creuse de soupape (23) pour guider l'élément coulissant guidé dans son mouvement ascendant et descendant.

6. Un système de traitement des gaz d'échappement d'un convertisseur de type étanche comme revendiqué à la revendication 2, dans lequel la tige de guidage (18) est en forme tubulaire avec un intérieur creux dans lequel un élément de rappel (32) est introduit pour ramener le corps de soupape (19) qui est tombé à ladite position inférieure jusqu'à dite position supérieure de fermeture de la soupape contre le siège de soupape (17).

FIG. 1

0 225 930

F I G. 2

F I G. 3

2